# EUROPEAN PATENT APPLICATION

(11) **EP 2 642 743 A2**
(43) Date of publication of application: **25.09.2013**
(21) Application number: 13156566.5
(22) Date of filing: 25.02.2013
(51) Int. Cl.: H04N 1/32

(54) **Image forming apparatus, address setting method, and storage medium storing program**

(30) Priority: 23.03.2012 JP 2012067979
(71) Applicant: Canon Kabushiki Kaisha, Tokyo 146-8501 (JP)
(72) Inventor: Takamiya, Hiroyoshi, Tokyo, Tokyo 146-8501 (JP)
(74) Representative: TBK

(57) **Abstract**

Among a plurality of MAC addresses, a MAC address to which an IP address is to be allocated is set, and key data for tracking an IP address corresponding to the image forming apparatus is set. An external apparatus is notified of the set MAC address and set key data.

## Description

### BACKGROUND OF THE INVENTION

### Field of the Invention

The present invention relates to an image forming apparatus for setting a MAC address, an address setting method, and a storage medium storing a program.

### Description of the Related Art

When an image forming apparatus such as a printer equipped with a network interface is used across a network, a DHCP or the like allocates an IP address to the MAC address of the apparatus. An information processing apparatus such as a PC that controls the image forming apparatus can track the dynamically changeable IP address of the image forming apparatus based on the MAC address. Therefore, even when the IP address changes because the image forming apparatus is restarted or the effective period of the IP address has expired, the information processing apparatus can automatically track the IP address of the image forming apparatus.

As wireless network apparatuses increase in number in recent years, many image forming apparatuses include a plurality of network interfaces such as a wired network interface and wireless network interface. In an image forming apparatus like this, the network interfaces are switched in some cases. An example is a case in which the image information apparatus is initialized by using the wired network interface but operated by using the wireless network interface after that. Another example is a case in which an error occurs in a wireless access point while the image forming apparatus is operated by using the wireless network interface and the apparatus is kept operated by switching to the wired network interface. A still another example is a case in which the form of connection to a network is physically changed by changing the installation location of the image forming apparatus.

The plurality of network interfaces of the image forming apparatus have unique MAC addresses, respectively. If the network interfaces are switched as described above, therefore, the MAC addresses also change. Accordingly, an external apparatus cannot track the IP address of the image forming apparatus based on its MAC address, and cannot communicate with the image forming apparatus any longer.

Japanese Patent Laid-Open No. 2002-51068 describes that two network apparatuses are duplicated as one set and one of their MAC addresses is determined as a system MAC address. Japanese Patent Laid-Open No. 2002-51068 describes that an external apparatus can seamlessly access the two network apparatuses because the system MAC address is used when the external apparatus communicates with the network apparatuses.

In Japanese Patent Laid-Open No. 2002-51068, however, one of the MAC addresses of the two apparatuses is determined as the system MAC address. Therefore, if the MAC address of at least one of the apparatuses changes, the system MAC address also changes, so communication with an external apparatus cannot be continued.

### SUMMARY OF THE INVENTION

An aspect of the present invention is to eliminate the above-mentioned problems with the conventional technology. The present invention provides an image forming apparatus that uniquely sets a MAC address for tracking an IP address, an address setting method, and a storage medium storing a program.

The present invention in its first aspect provides an image forming apparatus as specified in claims 1 to 5.

The present invention in its second aspect provides an address setting method as specified in claim 6.

The present invention in its third aspect provides a computer-readable storage medium as specified in claim 7.

In the present invention, a MAC address for tracking an IP address can uniquely be set.

Further features of the present invention will become apparent from the following description of exemplary embodiments with reference to the attached drawings.

### BRIEF DESCRIPTION OF THE DRAWINGS

Fig. 1 is a block diagram showing the hardware configuration of an image forming apparatus;

Figs. 2A and 2B are views for explaining the notification of the key MAC address of the image forming apparatus;

Fig. 3 is a flowchart showing the procedure of an IP address automatic tracking process; and

Fig. 4 is a flowchart showing the procedure of a key MAC address selecting process.

### DESCRIPTION OF THE EMBODIMENTS

Preferred embodiments of the present invention will now be described hereinafter in detail, with reference to the accompanying drawings. It is to be understood that the following embodiments are not intended to limit the claims of the present invention, and that not all of the combinations of the aspects that are described according to the following embodiments are necessarily required with respect to the means to solve the problems according to the present invention. Note that the same reference numerals denote the same constituent elements, and a repetitive explanation thereof will be omitted.

### [First Embodiment]

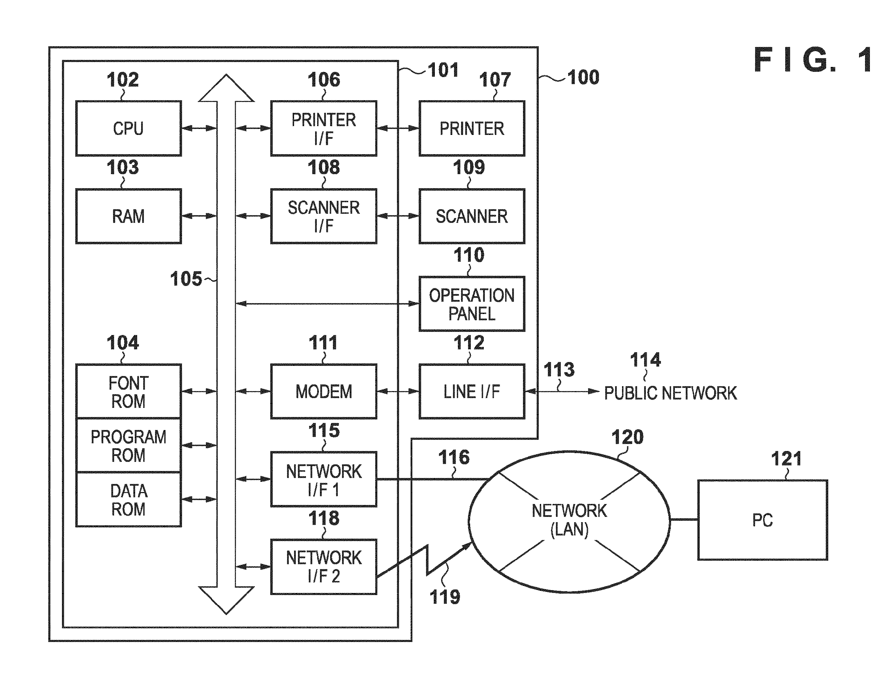

Fig. 1 is a block diagram showing the hardware configuration of an image forming apparatus 100 of an embodiment according to the present invention. Referring to Fig. 1, arrows between blocks indicate the flows of data or instructions. In this embodiment, a process by which the image forming apparatus sets a unique MAC address for a dynamically changeable IP address will be described by taking, as an example, a case in which a PC tracks the IP address of a printer (the image forming apparatus) connected to the PC. However, this process may also be executed on, for example, a PC managed by a server, instead of the image forming apparatus. In the following description, both the image forming apparatus and PC will also generically be referred to as communicating apparatuses.

The image forming apparatus 100 includes a printer 107, a scanner 109, an operation panel 110, a line interface (I/F) 112, and a controller 101 for controlling them. The controller 101 includes a CPU 102, RAM 103, ROM 104, printer I/F 106, scanner I/F 108, MODEM 111, and network I/Fs 115 and 118. Also, these blocks are connected via a system bus 105 so that they can communicate with each other.

The CPU 102 comprehensively controls the above-mentioned blocks in accordance with various control programs. The CPU 102 reads out and executes a control program stored in a program area of the ROM 104. Alternatively, the CPU 102 executes compressed data stored in the program area of the ROM 104 by decompressing and expanding the data into the RAM 103. The various control programs may also be stored in a compressed/uncompressed state in a hard disk drive (HDD) (not shown). The network I/Fs 115 and 118 connect the image forming apparatus 100 to a network (LAN) 120. With this arrangement, the CPU 102 can communicate with a host computer (PC) 121 across the network 120. The image forming apparatus 100 can connect to a wired network 116 and wireless network by using the network I/Fs 115 and 118 and network 120. It is possible to use, for example, a LAN cable as the wired network 116, and use, for example, a wireless LAN as a wireless network 119. The MODEM 111 is connected to a public network 114 via the line I/F 112. With this arrangement, the CPU 102 can communicate with, for example, another image forming apparatus, a facsimile apparatus, or a telephone set (none of them is shown). The line I/F 112 and public network 114 are connected by a telephone line 113 or the like.

The printer I/F 106 functions as an interface for outputting an image signal to the printer 107 (a printer engine). The scanner I/F 108 functions as an interface for receiving a scanned image signal from the scanner 109 (a scanner engine). With this arrangement, the CPU 102 can process an input image signal from the scanner I/F 108, and output the processed image signal as a printing image signal to the printer I/F 106. The CPU 102 displays characters and symbols on a display unit of the operation panel 110 by using font information stored in a font area (font ROM) of the ROM 104, and accepts instructions from the user via the operation panel 110. Also, the CPU 102 stores, for example, apparatus information of the image forming apparatus 100, user's telephone directory information, and department management information in a data area (data ROM) of the ROM 104, and reads out and updates these pieces of information as needed. Although the scanner 109 and printer 107 are formed inside the image forming apparatus 100 in Fig. 1, one or both of these units may also be formed outside.

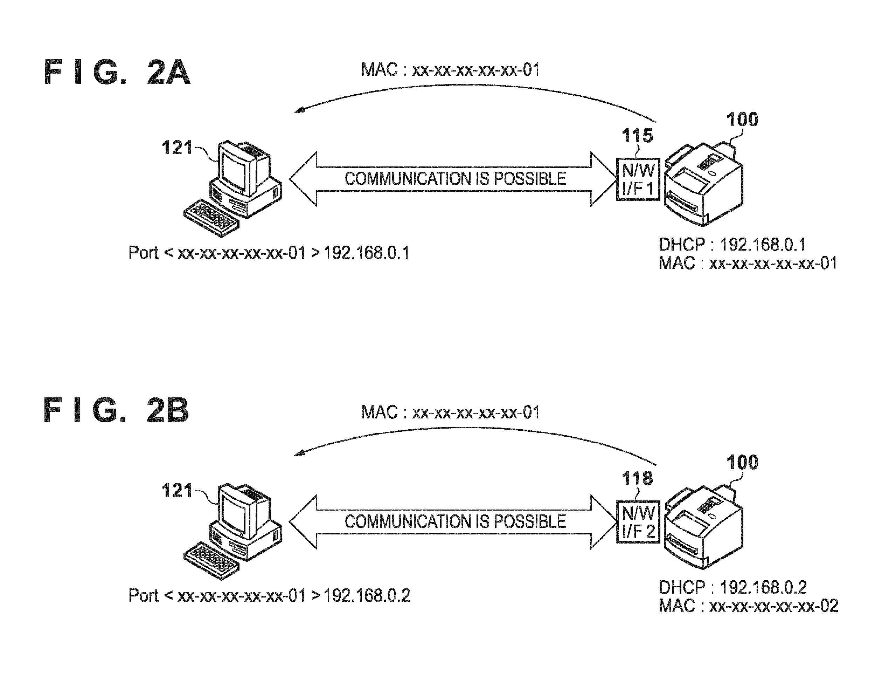

Figs. 2A and 2B are views for explaining the notification of a key MAC address in this embodiment. The image forming apparatus 100 physically includes the network interfaces 115 and 118. For example, the network interface 115 is a wired network interface, and the network interface 118 is a wireless network interface. Also, the network interface 115 has a MAC address "xx-xx-xx-xx-xx-01", and the network interface 118 has a MAC address "xx-xx-xx-xx-xx-02". Assume that a DHCP (Dynamic Host Configuration Protocol) allocates an IP address "192.168.0.1" when using the network interface 115. Assume also that the DHCP allocates an IP address "192.168.0.2" when using the network interface 118.

For example, the PC 121 installs a printer driver corresponding to the image forming apparatus 100 as a printer. In this case, the PC 121 inquires of the image forming apparatus 100 about information necessary to communicate with the image forming apparatus 100. The necessary information herein mentioned includes the MAC address of a presently effective network interface of the image forming apparatus 100, an IP address allocated to the MAC address, and a key MAC address. The key MAC address is a MAC address required for the PC 121 to track the IP address of the image forming apparatus 100 in Figs. 1, 2A, and 2B. That is, the key MAC address is a MAC address that functions as a key. When the image forming apparatus 100 includes a plurality of network interfaces, the MAC address of one of these network interfaces can be set as the key MAC address.

The notification of the key MAC address of the image forming apparatus 100 will be explained below with reference to Figs. 2A and 2B. First, assume that the presently effective network interface of the image forming apparatus 100 is the network interface 115. Second, assume that the image forming apparatus 100 has set the MAC address of the network interface 115 as the key MAC address.

The PC 121 shown in Fig. 2A inquires of the image forming apparatus 100 about information necessary to communicate with the image forming apparatus 100. The image forming apparatus 100 notifies the PC 121 of the MAC address "xx-xx-xx-xx-xx-01" of the network interface 115, the IP address "192.168.0.1", and the key MAC address "xx-xx-xx-xx-xx-01". After that, the PC 121 can communicate with the image forming apparatus 100 by forming a port by using the key MAC address and IP address notified from the image forming apparatus 100.

Assume that the image forming apparatus 100 switches from the network interface 115 to the network interface 118 in this state. This is equivalent to a case in which the image forming apparatus 100 switches from the connection to the wired network to the connection to the wireless network. Assume that the PC 121 installs the printer driver of the image forming apparatus 100 and inquires of the image forming apparatus 100 about information necessary to communicate with it. As shown in Fig. 2B, the image forming apparatus 100 notifies the PC 121 of the MAC address "xx-xx-xx-xx-xx-02" of the network interface 118, the IP address "192.168.0.2", and the key MAC address "xx-xx-xx-xx-xx-01". After that, the PC 121 can communicate with the image forming apparatus 100 by forming a port by using the key MAC address and IP address notified from the image forming apparatus 100.

In this embodiment as described above, even when the image forming apparatus 100 has a plurality of MAC addresses, an external apparatus is notified of a MAC address always unique to the IP address in order to track it. With this arrangement, the external apparatus (PC 121) can reliably track the dynamically changeable IP address by using a DHCP or the like, based on the key MAC address notified from the image forming apparatus 100.

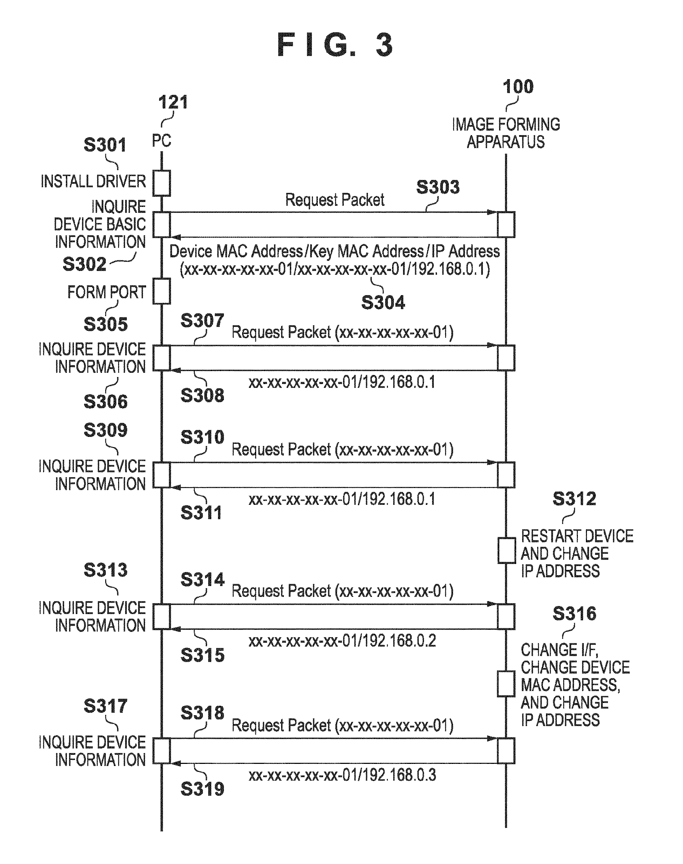

Fig. 3 is a view showing the procedure of an IP address automatic tracking process in this embodiment. Processing on the side of the PC 121 shown in Fig. 3 is executed by, for example, the CPU of the PC 121. Also, processing on the side of the image forming apparatus 100 shown in Fig. 3 is executed by, for example, the CPU 102 of the image forming apparatus 100.

First, in step S301, the CPU of the PC 121 installs the driver of the image forming apparatus 100 in the PC 121. This driver is, for example, a printer driver. This processing in step S301 allows the PC 121 to use a function (for example, a printer function) of the image forming apparatus 100. In step S302, the CPU of the PC 121 inquires of the image forming apparatus 100 about apparatus basic information for communicating with the image forming apparatus 100 across the network 120. This is equivalent to the processing explained above with reference to Figs. 2A and 2B. The apparatus basic information includes the MAC address (also called the device MAC address) of a presently effective network interface of the image forming apparatus 100, the above-mentioned key MAC address, and a presently allocated IP address.

In step S303, the CPU of the PC 121 transmits, to the image forming apparatus 100, a request packet for requesting the aforementioned apparatus basic information. In step S304, the CPU 102 of the image forming apparatus 100 notifies the PC 121 of the MAC address of the presently effective network interface, the key MAC address (key data), and the IP address presently allocated to the image forming apparatus 100. In step S305, the CPU of the PC 121 forms a port for communicating with the image forming apparatus 100 across the network 120, by using the apparatus basic information obtained from the image forming apparatus 100. In this embodiment, the MAC address of the presently effective network interface is "xx-xx-xx-xx-xx-01", the key MAC address of the image forming apparatus 100 is "xx-xx-xx-xx-xx-01", and the IP address presently allocated to the image forming apparatus 100 is "192.168.0.1".

After forming the port in step S305, the CPU of the PC 121 transmits request packets (broadcast packets) to the image forming apparatus 100 at a predetermined arbitrary time interval in steps S306 and S309, in order to detect (track) the change in IP address. More specifically, the CPU of the PC 121 transmits request packets in steps S307 and S310 based on the key MAC address obtained in step S302, thereby requesting the notification of the IP address. In steps S308 and S311, the CPU 102 of the image forming apparatus 100 having the requested key MAC address notifies the PC 121 of the key MAC address and presently allocated IP address in response to the requests in steps S307 and S310.

Assume that the image forming apparatus 100 having the key MAC address "xx-xx-xx-xx-xx-01" is restarted by a user's operation or the like in step S312. In this embodiment, an IP address automatically obtained by the DHCP or the like upon restart is changed to "192.168.0.2".

In step S313, the CPU of the PC 121 transmits request packets to the image forming apparatus 100 at a predetermined arbitrary time interval in order to detect the change in IP address, as in steps S306 and S309. More specifically, in step S314, the CPU of the PC 121 transmits a request packet based on the key MAC address obtained in step S302, thereby requesting the notification of the IP address. In step S315, the CPU 102 of the image forming apparatus 100 having the requested key MAC address notifies the PC 121 of the key MAC address and the presently allocated IP address "192.168.0.2", in response to the request in step S314.

Assume that the network interfaces of the image forming apparatus 100 having the key MAC address "xx-xx-xx-xx-xx-01" are switched in step S316. This is a case in which the user changes the connections of the image forming apparatus 100 from the wired network to the wireless network. In this embodiment, the IP address is further changed to "192.168.0.3" when the network interfaces are switched.

In step S317, the CPU of the PC 121 transmits request packets to the image forming apparatus 100 at a predetermined arbitrary time interval in order to detect the change in IP address, as in steps S306 and S309. More specifically, in step S318, the CPU of the PC 121 transmits a request packet based on the key MAC address obtained in step S302, thereby requesting the notification of the IP address. In step S319, the CPU 102 of the image forming apparatus 100 having the requested key MAC address notifies the PC 121 of the key MAC address and the presently allocated IP address "192.168.0.3", in response to the request in step S318.

In this embodiment as described above, the PC 121 can track the IP address without detecting the change in MAC address of the image forming apparatus 100. Consequently, even when the MAC address of the image forming apparatus 100 is changed, it is unnecessary to obtain the apparatus basic information by installing the driver of the image forming apparatus 100.

### [Second Embodiment]

In the first embodiment, the key MAC address is fixedly set as the MAC address of a given network interface of the image forming apparatus 100. In this embodiment, when the image forming apparatus 100 includes a plurality of network interfaces, the MAC address of a network interface designated by the user is set as the key MAC address.

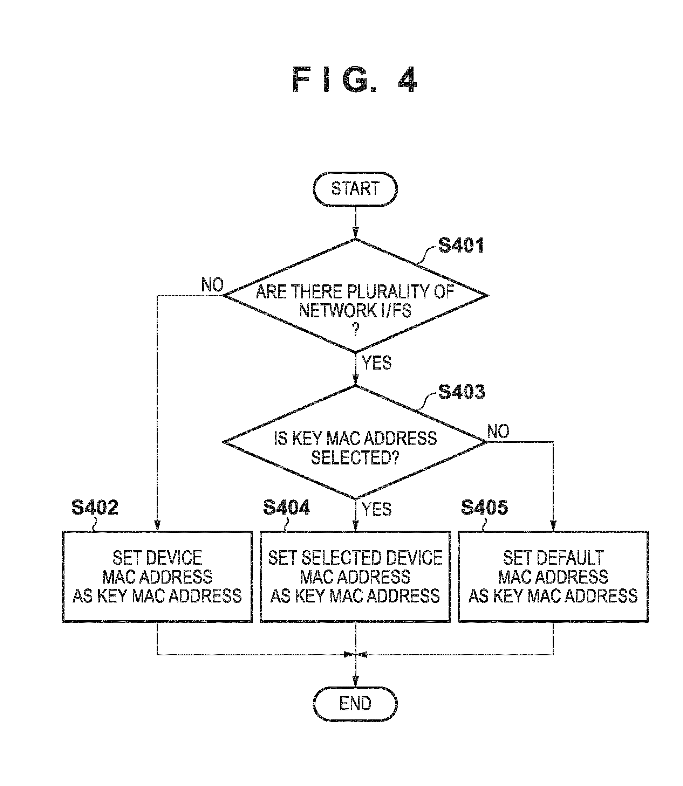

Fig. 4 is a flowchart showing the procedure of key MAC address setting in this embodiment. This process shown in Fig. 4 is executed by, for example, the CPU 102 of the image forming apparatus 100. In step S401, the CPU 102 determines whether a plurality of network interfaces are installed in the image forming apparatus 100. If it is determined that only one network interface is installed, the CPU 102 sets the MAC address (device MAC address) of the network interface as the key MAC address in step S402, and terminates the process shown in Fig. 4.

On the other hand, if it is determined that a plurality of network interfaces are installed, the process advances to step S403, and the CPU 102 allows the user to select a network interface whose MAC address is to be used as the key MAC address. In this step, the CPU 102 causes the operation panel 110 to display a list of the MAC addresses of the network interfaces as a selection screen, and accepts a user's selection on the selection screen as the key MAC address. Then, the CPU 102 determines whether a user's selection is accepted.

If it is determined that a user's selection is accepted, the CPU 102 sets the MAC address of the network interface selected by the user as the key MAC address in step S404. On the other hand, if it is determined that no user's selection is accepted, the process advances to step S405, and the CPU 102 selects a preset default MAC address as the key MAC address. For example, if the user has not selected the MAC address of any network interface, the MAC address of one of the network interfaces is selected as the key MAC address.

### <Other Embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
Among a plurality of MAC addresses, a MAC address to which an IP address is to be allocated is set, and key data for tracking an IP address corresponding to the image forming apparatus is set. An external apparatus is notified of the set MAC address and set key data.

## Claims

1. An image forming apparatus (100) capable of handling a plurality of MAC addresses, comprising:
setting means (102) for setting a MAC address of the plurality of MAC addresses to which an IP address is to be allocated, and key data for tracking an IP address corresponding to the image forming apparatus; and
notification means (102) for notifying an external apparatus of the MAC address and the key data set by said setting means.

2. The apparatus according to claim 1, wherein the plurality of MAC addresses are respectively allocated to a plurality of network interfaces for connecting the image forming apparatus to a plurality of networks.

3. The apparatus according to claim 1, wherein said setting means sets the key data from the plurality of MAC addresses.

4. The apparatus according to claim 3, wherein said setting means sets a MAC address selected from the plurality of MAC addresses on a selection screen by a user, as the key data.

5. The apparatus according to claim 1, wherein
the image forming apparatus is a printer, and
said notification means notifies the MAC address and the key data in response to a request from the external apparatus, in a case where the external apparatus installs a printer driver of the printer.

6. An address setting method to be executed in an image forming (100) apparatus having a plurality of MAC addresses, comprising:
a setting step of setting a MAC address of the plurality of MAC addresses to which an IP address is to be allocated, and key data for tracking an IP address corresponding to the image forming apparatus; and
a notification step of notifying an external apparatus of the MAC address and the key data set in the setting step.

7. A computer-readable storage medium storing a program for causing a computer to execute an address setting method to be executed in an image forming apparatus (100) having a plurality of MAC addresses, the method comprising:
a setting step of setting a MAC address of the plurality of MAC addresses to which an IP address is to be allocated, and key data for tracking an IP address corresponding to the image forming apparatus; and
a notification step of notifying an external apparatus of the MAC address and the key data set in the setting step.
